# EUROPÄISCHE PATENTSCHRIFT

(11) **EP 4 246 260 B1**
(45) Veröffentlichungstag und Bekanntmachung des Hinweises auf die Patenterteilung: **13.08.2025**
(21) Anmeldenummer: 22162149.3
(22) Anmeldetag: 15.03.2022
(51) Int. Cl.: G05B 23/02

(54) **ADAPTER ZUM FERNWARTEN EINES EINE ANZEIGEEINHEIT AUFWEISENDEN STEUERGERÄTS**
ADAPTER FOR REMOTE MAINTENANCE OF A CONTROL DEVICE HAVING A DISPLAY UNIT
ADAPTATEUR PERMETTANT D'ENTRETENIR À DISTANCE UN APPAREIL DE COMMANDE COMPRENANT UNE UNITÉ D'AFFICHAGE

(43) Veröffentlichungstag der Anmeldung: 20.09.2023
(73) Patentinhaber: Hoffmann, Hauke, 23556 Lübeck (DE)
(72) Erfinder: Hoffmann, Hauke, 23556 Lübeck (DE)
(74) Vertreter: Patentanwälte Hemmer Lindfeld Frese Partnerschaft mbB

(56) Entgegenhaltungen:
- EP-A1- 0 387 359
- DE-A1- 102015 114 627
- US-A- 6 081 856
- US-A1- 2004 024 840

## Beschreibung

Die Erfindung betrifft einen Adapter zum Koppeln eines eine Anzeigeeinheit aufweisenden Steuergeräts mit einem Kommunikationsnetzwerk und einem Adaptersystem mit mindestens einem Adapter und einer Kommunikationseinheit.

Industrieanlagen, die Steuerungssysteme aufweisen, besitzen oftmals die Fähigkeit, auch aus der Ferne gewartet zu werden. Hierzu sind die Steuerungssysteme üblicherweise mit einem Kommunikationsnetzwerk gekoppelt. Es ist weiterhin bekannt, dass zum Realisieren eines solchen Fernzugriffs proprietäre Protokolle und verschlüsselte Verbindungen verwendet werden, die nur dem Hersteller bekannt sind. Für den Betreiber der Industrieanlage kann dies kostenintensiv sein, da Fernwartungsaufgaben nicht direkt durch den Betreiber ausführbar sind und der Hersteller diese Dienstleistungen in Rechnung stellt.

Die Dokumente US 6 081 856 A, US 2004/024840 A1, EP 0 387 359 A1 und DE 10 2015 114627 A1 betreffen Lösungen für Rechner, die für Steuerung angewendet werden können, bzw. Steuervorrichtungen, bei denen mittels einer eingebauten Komponente, wie z.B. eine Netzwerkkarte oder ein Modem ein Videostream über das angeschlossene Netzwerk an externe Komponenten gesendet werden kann.

Aufgabe der vorliegenden Erfindung ist es, eine Vorrichtung oder ein System bereitzustellen, mit dem ein rascher und kostengünstiger Fernzugriff ermöglicht wird, ohne komplexe Modifikationen an dem Steuerungssystem vorzunehmen.

Diese Aufgabe wird gemäß der Erfindung durch einen Adapter zum Koppeln eines eine Anzeigeeinheit aufweisenden Steuergeräts mit den in Anspruch 1 angegebenen Merkmalen gelöst. Vorteilhafte Ausgestaltungen des Adapters ergeben sich aus den Unteransprüchen, der nachfolgenden Beschreibung und den Zeichnungen, wobei die in den Unteransprüchen und der Beschreibung angegebenen Merkmale jeweils für sich aber auch in geeigneter Kombination anwendbar sind.

Der erfindungsgemäße Adapter zum Koppeln eines eine Anzeigeeinheit aufweisenden Steuergeräts mit einem Kommunikationsnetzwerk weist einen Träger mit einem ersten Verbinder zum Verbinden des Adapters mit einem Anzeigenanschluss des Steuergeräts, einem mit dem ersten Verbinder elektrisch verbundenen zweiten Verbinder zum Durchleiten empfangener Signale von dem ersten Verbinder zu dem zweiten Verbinder, einer Prozessoreinheit, und einer Datenschnittstelle auf, wobei der erste Verbinder und der zweite Verbinder mechanisch komplementär zueinander ausgeführt sind, wobei die Prozessoreinheit mit dem ersten Verbinder und der Datenschnittstelle gekoppelt ist und dazu ausgebildet ist, von dem ersten Verbinder empfangene Ansteuerungssignale, die zum Ansteuern einer Anzeigeeinheit vorgesehen sind, in einen Datensatz oder einen Datenstrom umzusetzen und an die Datenschnittstelle zu leiten, und wobei die Datenschnittstelle dazu ausgebildet ist, den Datensatz oder Datenstrom zu einer externen Kommunikationseinheit zu übertragen.

Der erfindungsgemäße Adapter kann nahezu ohne Modifikation des betreffenden Steuergeräts einen Fernzugriff realisieren. Hierbei wird angenommen, dass das betreffende Steuergerät eine Schaltplatine umfasst, an der vorgesehen ist, eine Anzeigeeinheit und vorzugsweise eine Eingabeeinheit anzubinden. In einem besonders einfachen Fall ist der Adapter dazu ausgebildet, Informationen, die einem Benutzer vor Ort auf der Anzeigeeinheit angezeigt werden, zusätzlich an der Datenschnittstelle zur Übertragung bereitzustellen.

Die Anzeigeeinheit könnte ein Display aufweisen, das aus unterschiedlichsten Varianten ausgewählt ist. Neben einfachen Status-LEDs oder 7-Segment Anzeigen können auch Matrix-Displays unterschiedlicher Größen verfügbar sein. Üblicherweise sind solche Anzeigeeinheiten zumindest weitgehend standardisiert und umfassen einen Steckanschluss mit mehreren, voneinander beabstandeten Pins in einer oder mehreren Reihen. Die Schaltplatine des Steuergeräts weist zum Verbinden mit der Anzeigeeinheit einen entsprechenden Anzeigenanschluss auf, in den die Pins der Anzeigeeinheit eingesteckt werden.

Das Steuergerät kann je nach Industrieanlage verschiedene Aufgaben ausführen und einem Benutzer hierzu bedarfsweise Informationen auf der Anzeigeeinheit darstellen, die individuell von der Ausführung des Steuergeräts abhängen. Eine Eingabeeinheit mit Tastern und/oder Schaltern kann vorgesehen sein, um Eingaben an dem Steuergerät vorzunehmen. Es ist daher vorstellbar, dass ein Benutzer vor Ort an dem Steuergerät verschiedene Betriebsparameter über die Anzeigeeinheit prüft und durch die Eingabeeinheit gegebenenfalls ändert. Das Steuergerät könnte hierfür ein Menü oder eine andere Benutzerführung auf der Anzeigeeinheit darstellen und der Benutzer kann mittels der Eingabeeinheit zu gewünschten Betriebsparametern navigieren und diese anzeigen und/oder ändern.

Der erfindungsgemäße Adapter nutzt die vorgesehene Verbindung zwischen der Anzeigeeinheit und der Schaltplatine aus, um die an die Anzeigeeinheit übertragenen Ansteuerungssignale aufzunehmen. Hierzu ist der erste Verbinder so ausgestaltet wie ein Steckanschluss der Anzeigeeinheit, sodass er direkt in einen Anzeigenanschluss des Steuergeräts bzw. der Schaltplatine des Steuergeräts einsteckbar ist. Da der zweite Verbinder komplementär zu dem ersten Verbinder ausgeführt ist, entspricht er weitgehend dem Anzeigenanschluss des Steuergeräts. Da er zudem auf einer gegenüberliegenden Seite des Adapters angeordnet ist, kann die Anzeigeeinheit, wenn der Adapter mit dem Anzeigenanschluss verbunden ist, in den zweiten Verbinder gesteckt werden. Der erste Verbinder leitet die empfangenen Signale direkt und vollständig an den zweiten Verbinder durch, sodass die Funktion der Anzeigeeinheit vollständig erhalten bleibt.

Die Prozessoreinheit ist mit dem ersten Verbinder gekoppelt. Folglich kann der Prozessor direkt oder über eine dazwischen geschaltete Einrichtung Ansteuerungssignale für die Anzeigeeinheit oder daraus abgeleitete Signale oder Daten empfangen und verarbeiten. Die Ausbildung der Ansteuerungssignale ist von der Ausführung der vorgesehenen Anzeigeeinheit abhängig. Ziel ist, aus den Ansteuerungssignalen Daten oder einen Datenstrom bereitzustellen, der über die Datenschnittstelle zu einer Kommunikationseinheit übertragbar ist, um standardisierte Protokolle, Verschlüsselungsverfahren oder ähnliches einsetzen zu können.

Die Prozessoreinheit könnte dazu ausgebildet sein, die Ansteuerungssignale direkt auszuwerten. Neben analogen Varianten sind auch digitale Ansteuerungssignale denkbar. Werden analoge Ansteuerungssignale eingesetzt, ist denkbar, dass die Prozessoreinheit einen oder mehrere Spannungssensoren umfasst oder damit verbunden ist, wobei die Spannungssensoren in der Lage sind, Spannungen für die einzelnen Pins der Anzeigeeinheit zu erfassen und hieraus die durch die Ansteuerungssignale veranlasste Anzeige zu ermitteln. Es ist auch vorstellbar, eine vorgeschaltete Einrichtung zu verwenden, die direkt mit dem ersten Verbinder verbunden ist und von den Ansteuerungssignalen abhängige Daten an die Prozessoreinheit sendet, welche damit die Anzeige ermittelt. Für die Realisierung des erfindungsgemäßen Adapters ist eine individuelle Anpassung an die Ansteuerungssignale sinnvoll. Die Prozessoreinheit könnte softwareseitig angepasst werden, um unterschiedlichste Signale oder Daten auswerten zu können.

Die Prozessoreinheit ist demzufolge in der Lage, aus abstrakten Ansteuersignalen für eine Anzeigeeinheit einen übertragbaren Datensatz oder Datenstrom bereitzustellen, der über die Datenschnittstelle nach außen übertragbar ist. Eine geeignete Kommunikationseinheit kann dann die an der Datenschnittstelle gelieferten Daten aufnehmen und insbesondere über standardisierte Kommunikationsverfahren einem Betreiber der Industrieanlage zuführen. Folglich ist der Adapter praktisch ohne Modifikationen in der Lage, einen Fernzugriff für ein Steuergerät einer Industrieanlage bereitzustellen.

In einer vorteilhaften Ausführungsform weist der Träger eine Platine auf, wobei der erste Verbinder und der zweite Verbinder deckungsgleich auf einer Unterseite und einer Oberseite des Trägers angeordnet sind. Die Platine des Adapters ist bevorzugt an eine Anzeigeplatine der Anzeigeeinheit angepasst, falls die Anzeigeeinheit eine solche aufweist. Die Anzeigeeinheit des Steuergeräts lässt sich folglich einfach durch den Adapter austauschen, um die dem Steuergerät entnommene Anzeigeeinheit dann auf den Adapter zu stecken. Der Begriff "deckungsgleich" ist dahingehend zu verstehen, dass beide Verbinder in einer Draufsicht auf eine Ober- oder Unterseite der Platine einander überdecken bzw. aufeinander angeordnet sind. Es ist vorstellbar, dass der erste Verbinder eine Reihe von Pins aufweist, die in einen Anzeigenanschluss des Steuergeräts steckbar sind. Der zweite Verbinder könnte eine Reihe von Vertiefungen und Kontaktfedern zum Aufnehmen und Kontaktieren von Pins umfassen. Der zweite Verbinder könnte zum Kontaktieren von Leiterbahnen des Adapters mehrere Pins umfassen, die entsprechend verlötet werden. Diese Pins könnten derart dimensioniert sein, dass sie beim Aufstecken und Verlöten des zweiten Verbinders so weit durch den Träger auf die entgegengesetzte Seite ragen, dass sie selbst den ersten Verbinder darstellen. Der erste und der zweite Verbinder könnten folglich auch einteilig ausgeführt sein. Damit wird zusätzlich unmittelbar sichergestellt, dass Ansteuerungssignale aus dem Steuergerät direkt aus dem ersten Verbinder in den zweiten Verbinder geleitet werden.

In einer vorteilhaften Ausführungsform ist die Datenschnittstelle eine optische Datenschnittstelle. Durch die Verwendung einer optischen Datenschnittstelle kann eine Kommunikationseinheit elektrisch bzw. galvanisch vollständig von dem Adapter getrennt werden. Zum Verbinden der optischen Datenschnittstelle mit einer Kommunikationseinheit können standardisierte Kabel und Stecker mit unterschiedlichen Formen und Kontaktschliffen eingesetzt werden.

In einer vorteilhaften Ausführungsform weist der Adapter ferner eine Vorsteuerung auf, die dazu ausgebildet ist, die Ansteuerungssignale aufzunehmen und zu einer für die Anzeigeeinheit vorgesehenen Abbildung zu dekodieren. Die Dekodierung der Ansteuerungssignale ist von der Art der vorgesehenen Anzeigeeinheit sowie der Ansteuerungssignale selbst abhängig. Es ist denkbar, dass die Anzeigeeinheit über einen Datenbus, beispielsweise einen 4-oder 8-Bit Datenbus, digital angesteuert wird. Das Display, das in der Anzeigeeinheit enthalten ist, kann insbesondere über einen in der Anzeigeeinheit integrierten Treiberbaustein angesteuert werden, der die über den Datenbus ausgesandten Signale in direkte Steuerspannungen für einzelne Zellen des Displays nutzt. Der Aufwand für den Anschluss einer Anzeigeeinheit an dem Steuergerät ist dadurch minimiert und es sind vielfältige Anzeigeeinheiten mit einer solchen Ansteuerung über einen Datenbus kommerziell erhältlich. Der Adapter ist durch die Vorsteuerung in der Lage, ein auf die verwendete Anzeigeeinheit abgestimmtes Nachbilden einer auf der Anzeigeeinheit anzuzeigenden Abbildung durchzuführen. Die Signale über den Datenbus oder anders geartete Ansteuerungssignale werden folglich zum Zusammensetzen einer Abbildung umgesetzt, die auf der Anzeigeeinheit angezeigt wird. Die Vorsteuerung kann folglich ähnlich wie ein genannter Treiberbaustein fungieren und Regeln aufweisen, die für die Umsetzung notwendig sind. Die Vorsteuerung kann ein Interface umfassen, das mit dem ersten Verbinder koppelbar ist, um die Ansteuerungssignale aufzunehmen und der weiteren Verarbeitung zuzuführen. Die Vorsteuerung kann eine separate Einheit sein. Die Vorsteuerung könnte auch Teil der Prozessoreinheit sein. Das Interface der Vorsteuerung könnte dabei in die Prozessoreinheit integriert oder als ein separates Bauteil ausgeführt sein.

In einer vorteilhaften Ausführungsform weist der Prozessor eine Texterkennungseinheit auf, die dazu ausgebildet ist, die Ausgabe der Vorsteuerung in Textinformationen umzuwandeln. Folglich wird die abstrakte Abbildung einer Texterkennung unterworfen, um in der Abbildung enthaltene Zeichen sowie deren Anordnung festzustellen. Dies ist sinnvoll, um zu übertragende Informationen in ihrer Größe zu reduzieren. Dies könnte unter anderem die Datenübertragung auch bei geringen Bandbreiten erlauben.

In einer vorteilhaften Ausführungsform weist der Prozessor eine Inhaltserkennungseinheit auf, die dazu ausgebildet ist, spezifische Ausdrücke in den Textinformationen zu erkennen. Da die einfache Texterkennung zum automatisierten interpretieren des Inhalts der Abbildung nur in Ausnahmefällen ausreicht, wenn etwa lediglich ein einziges Zeichen dargestellt wird, ist es besonders sinnvoll, den erkannten Text auch logisch zu interpretieren. Das betreffende Steuergerät könnte eine statische Menüstruktur mit einem festgelegten Satz an Parametern umfassen. Informationen über die statische Menüstruktur und die einzelnen Parameter könnten in einem Speicher der Informationserkennungseinheit abgelegt sein. In den Textinformationen der Abbildung könnte durch die Inhaltserkennungseinheit folglich nach bekannten Ausdrücken gesucht werden, die in diesem Speicher abgelegt sind. Hierdurch kann die Inhaltserkennungseinheit identifizieren, welche Informationen, Parameter, Werte und dergleichen auf einer momentanen Anzeige der Anzeigeeinheit enthalten sind. Dadurch wird ermöglicht, Informationen zu sammeln, die über die reine Bilddarstellung hinausgehen und zudem von einer direkten Bedienung des Steuergeräts durch den Benutzer unabhängig sind. Ein Benutzer muss Informationen auf einer momentanen Anzeige daher nicht selbst erfassen und interpretieren, sondern dies kann durch die Inhaltserkennungseinheit durchgeführt werden. Damit könnte eine Fernwartung vereinfacht werden, denn eine Oberfläche eines Fernwartungsprogramms könnte unterschiedliche, einstellbare Parameter oder andere Informationen in übersichtlicher Weise darstellen, die durch erkannte Inhalte vorausgefüllt sind, die von der Inhaltserkennungseinheit geliefert wurden. Wie weiter nachfolgend dargestellt, erlaubt die Inhaltserkennungseinheit zudem ein automatisches Navigieren durch eine Menüstruktur.

In einer vorteilhaften Ausführungsform weist der Adapter ferner eine Instruktionseinheit auf, die mit dem Prozessor gekoppelt ist und mit Anschlüssen einer Eingabeeinheit des Steuergeräts verbindbar ist. Beispielhaft sind mehrere Taster an dem Steuergerät vorgesehen, die jeweils zwei Kontakte auf einer Schaltplatine überbrücken. Die Anschlüsse der Taster könnten an Lötstellen abgegriffen und der Instruktionseinheit zugeführt werden. Die Anordnung und Beschriftung der physischen Taster des Steuergeräts könnten in einem Fernwartungsprogramm reproduziert werden. Ein Benutzer könnte dann auf einer Benutzeroberfläche die entsprechenden Taster bedienen, was zu dem Adapter übertragen und durch die Instruktionseinheit an dem Steuergerät umgesetzt wird. In einem einfachen Fall ist die Instruktionseinheit dazu ausgebildet Kontakte zu überbrücken, etwa durch Relais oder Halbleiterschalter.

In einer vorteilhaften Ausführungsform ist die Instruktionseinheit dazu ausgebildet, elektrische Signale zum Simulieren von manuellen Eingaben in die Eingabeeinheit zu generieren. Die Instruktionseinheit generiert folglich Signale, die an die Eingabeeinheit des Steuergeräts geleitet werden, um Eingaben eines Benutzers vor Ort zu simulieren. Dies könnte für komplexere Eingabeeinheiten denkbar sein, die etwa ein Tastenfeld aufweisen, das über eine proprietäre oder standardisierte Schnittstelle mit dem Steuergerät verbunden ist. Die Instruktionseinheit ist dann dazu ausgebildet, entsprechende Daten oder Signale zu produzieren.

In einer vorteilhaften Ausführungsform weist der Prozessor eine Parameteränderungseinheit auf, die mit der Instruktionseinheit gekoppelt ist und dazu ausgebildet ist, automatisch mittels der Instruktionseinheit gezielt nacheinander änderbare Parameter aus dem Steuergerät abzurufen und/oder von einem Benutzer vorgegebene Parameter mittels der Instruktionseinheit in dem Steuergerät durch gezielte Eingaben zu ändern. Die Parameteränderungseinheit kann zu einer weiteren Automatisierung der Fernwartung genutzt werden. Das Steuergerät könnte etwa dazu ausgebildet sein, mehrere verschiedene Anzeigen zu generieren, die durch Tastendrücke der Eingabeeinheit durchlaufen werden können, um auf den verschiedenen Anzeigen verschiedene Parameter darzustellen. Andere Tastendrücke könnten vorgesehen sein, um die jeweils dargestellten Parameter zu ändern, beispielsweise inkrementell zu vergrößern oder zu verkleinern. Die Parameteränderungseinheit kann über einen Speicher Kenntnis einer solchen Menüstruktur, der zu ändernden Parameter und anderer Informationen haben. Durch die Kopplung mit der Instruktionseinheit könnte die Parameteränderungseinheit die Instruktionseinheit veranlassen, durch Generieren von Eingaben selbstständig zu einer gewünschten Anzeige zu wechseln, um dort die angezeigten Informationen der weiteren Verarbeitung zuzuführen. In einem ersten Betriebsmodus könnte die Parameteränderungseinheit sämtliche Parameter und Informationen aus dem Steuergerät abrufen, indem beispielsweise sämtliche möglichen, vorgesehenen Anzeigen durchlaufen und verarbeitet werden. Die Parameter und Informationen könnten durch die Inhaltserkennungseinheit erkannt und übertragen werden, um dann entsprechende Felder oder Grafiken eines Fernwartungsprogramms auszufüllen. In einem zweiten Betriebsmodus könnten Parameteränderungswünsche von einem Benutzer automatisch durch die Parameteränderungseinheit umgesetzt werden. Hierzu könnte diese eine betreffende Anzeige anwählen, um dann durch entsprechend simulierte Tastendrücke über die Instruktionseinheit die Parameter einzustellen.

Die Erfindung betrifft ferner ein Fernwartungssystem, aufweisend mindestens einen Adapter nach einem der vorhergehenden Ansprüche und eine Kommunikationseinheit, wobei der mindestens eine Adapter mit der Kommunikationseinheit verbindbar ist.

In einer vorteilhaften Ausführungsform ist die Kommunikationseinheit ein Datennetzwerkgerät.

In einer vorteilhaften Ausführungsform weist die Kommunikationseinheit mehrere Adapteranschlüsse auf, sodass mehrere der zuvor beschriebenen Adapter mit der Kommunikationseinheit signalverbunden werden können, sodass ein paralleler Datenaustausch mit mehreren Steuergeräten mit jeweils mindestens einem Adapter über die eine Kommunikationseinheit ermöglicht wird.

In einer vorteilhaften Ausführungsform sind der mindestens eine Adapter und die Kommunikationseinheit dazu ausgebildet, eine galvanisch getrennte Verbindung zueinander auszubilden. Vorzugsweise findet der Datenaustausch zwischen Adapter und Kommunikationseinheit optisch über einen oder mehrere Lichtleiter statt.

Die Erfindung betrifft ferner ein Verfahren zum Koppeln eines eine Anzeigeeinheit aufweisenden Steuergeräts mit einem Kommunikationsnetzwerk, mit den Schritten:
- Abkoppeln der Anzeigeeinheit (6) von einem Anzeigenanschluss (4) des Steuergeräts (60),
- Verbinden eines ersten Verbinders (18) eines Adapters (14) mit dem Anzeigenanschluss (4) des Steuergeräts (60),
- Umsetzen von über den ersten Verbinder (18) empfangenen Ansteuerungssignalen, die ursprünglich zum Ansteuern der abgekoppelten Anzeigeeinheit (6) vorgesehen sind, im Adapter (14) in einen Datensatz oder einen Datenstrom,
- Übertragen des Datensatzes oder des Datenstroms an eine mit dem Kommunikationsnetzwerk signalverbundene externe Kommunikationseinheit (36).

Optional kann das Verfahren ferner folgende Schritte aufweisen:
- Verbinden der abgekoppelten Anzeigeeinheit (6) mit einem zum ersten Verbinder (18) mechanisch komplementär ausgeführten zweiten Verbinder (26) des Adapters (14), und
- Anzeigen von Daten mittels der Anzeigeeinheit (6) entsprechend der empfangenen Ansteuerungssignale.

Optional kann das Verfahren ferner folgende Schritte aufweisen:
- Verbinden einer Instruktionseinheit (56) des Adapters (14) mit Anschlüssen einer Eingabeeinheit (62) des Steuergeräts (60), und
- Simulieren von manuellen Eingaben in die Eingabeeinheit (62) des Steuergeräts (60) mittels der Instruktionseinheit (56) des Adapters (14).

Die Erfindung ist nachfolgend anhand eines in den Zeichnungen dargestellten Ausführungsbeispiels näher erläutert. Es zeigen:
- Fig. 1: eine Schaltplatine des Steuergeräts in einer Draufsicht;
- Fig. 2: eine Anzeigeeinheit auf der Schaltplatine;
- Fig. 3: einen Adapter und die darauf befindliche Anzeigeeinheit auf der Schaltplatine;
- Fig. 4: schematisch das Prinzip, wie der Adapter funktional zwischen die Anzeigeeinheit und die Schaltplatine des Steuergeräts zwischengeschaltet wird;
- Fig. 5a und 5b: schematisch das Prinzip wie der Adapter räumlich zwischen die Anzeigeeinheit und die Schaltplatine des Steuergeräts zwischengeschaltet wird;
- Fig. 6a und 6b: die Anzeigeeinheit in zwei unterschiedlichen Ansichten;
- Fig. 7 und 8: den Adapter in zwei unterschiedlichen Ansichten;
- Fig. 9: eine mit dem Adapter verbundene Kommunikationseinheit;
- Fig. 10: eine schematische, block- und funktionsbasierte Darstellung des Adapters;
- Fig. 11: Gesamtansicht eines Systems aus Steuergerät, Adapter, Eingabeeinheit, der Anzeigeeinheit, Kommunikationseinheit sowie ein Fernwartungssystem; und
- Fig. 12: das Systems aus Steuergerät, Adapter, Eingabeeinheit, der Anzeigeeinheit, Kommunikationseinheit in einer blockbasierten Darstellung.

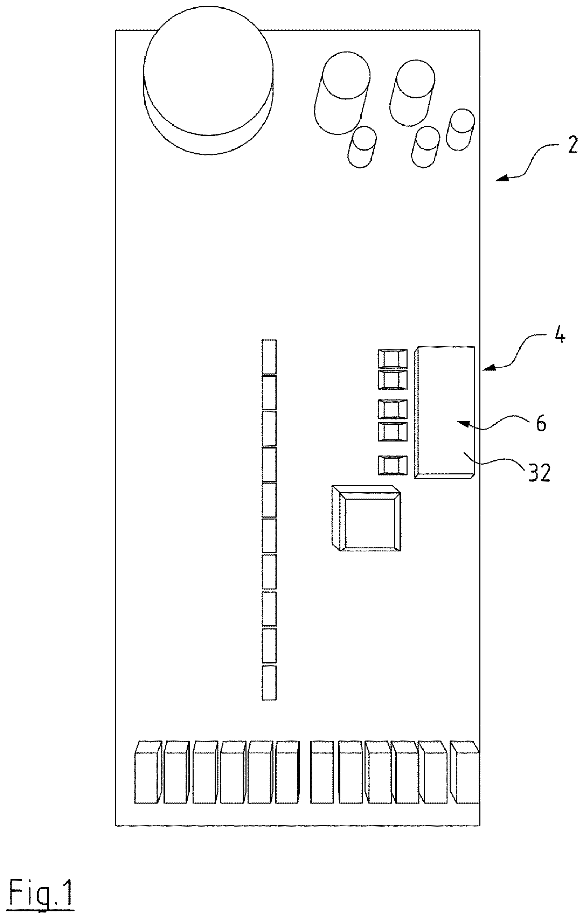

Fig. 1 zeigt beispielhaft eine Schaltplatine 2 eines Steuergeräts, auf das ein Fernzugriff gewünscht ist. Hier ist ein Anzeigenanschluss 4 in Form einer Pin-Steckerleiste zum Aufnehmen einer Anzeigeeinheit 6 vorgesehen. Auf dem Anzeigenanschluss 4 befindet sich die Anzeigeeinheit 6, welche zum Darstellen von verschiedenen Informationen vorgesehen ist und hierzu Ansteuerungssignale von der Schaltplatine 2 erhält. Die weiteren Funktionen der Schaltplatine 2 sind für die nachfolgende Beschreibung der Erfindung unerheblich.

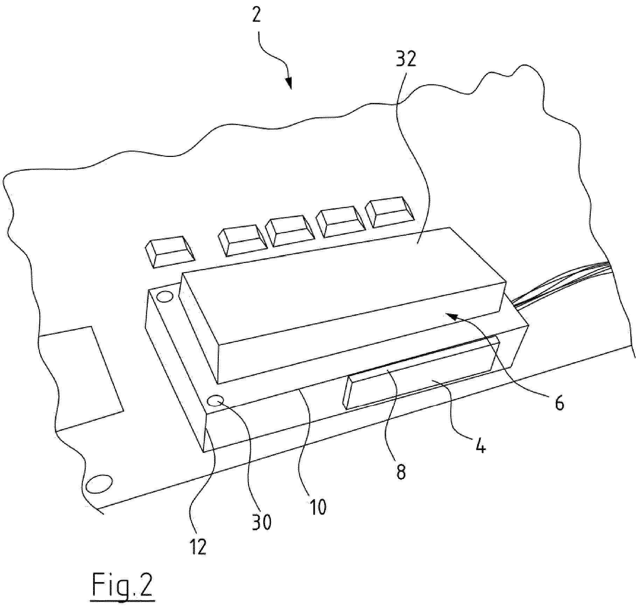

In Fig. 2 wird die Schaltplatine 2 in einer dreidimensionalen Ansicht gezeigt. Hier ist der Anzeigenanschluss 4 der Schaltplatine 2 zu erkennen, in den eine Reihe von Pins 8 der Anzeigeeinheit 6 eingesteckt sind. Die Anzeigeeinheit 6 weist eine Anzeigeplatine 10 auf, welche beispielhaft über Abstandshalter 12 auf der Schaltplatine 2 verschraubt ist.

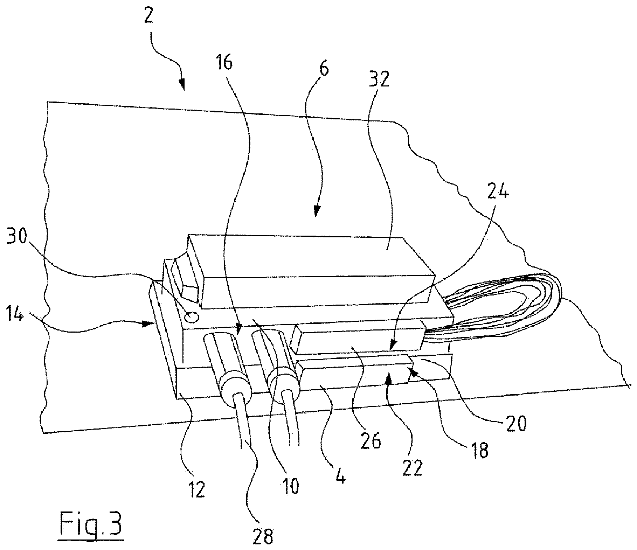

Wie in Fig. 3 gezeigt, ist erfindungsgemäß ist ein Adapter 14 zwischen der Anzeigeplatine 10 und der Schaltplatine 2 eingesetzt, um aus Ansteuerungssignalen aus dem Anzeigenanschluss 4, die der Anzeigeeinheit 6 zugeführt werden, einen Datensatz oder einen Datenstrom zu erzeugen und an einer Datenschnittstelle bereitzustellen. Hierzu weist der Adapter 14 einen ersten Verbinder 18 auf, der passend zu dem Anzeigenanschluss 4 ausgebildet ist und folglich der Anordnung von Pins 8 der Anzeigeeinheit 6 zumindest weitgehend entspricht. Der erste Verbinder 18 ist auf einem Träger 20 angeordnet, der in Form einer Platine ausgebildet ist, und erstreckt sich von einer Unterseite 22 des Trägers 20. An einer davon entgegengesetzten Oberseite 24 ist ein zweiter Verbinder 26 angeordnet, der komplementär zu dem ersten Verbinder 20 ausgeführt ist und folglich im Wesentlichen dem Anzeigenanschluss 4 entspricht. Ansteuerungssignale, die an dem Anzeigenanschluss 4 für die Anzeigeeinheit 6 bereitgestellt werden, werden folglich direkt in den zweiten Verbinder 26 geleitet. Die Anzeigeeinheit 6 ist auf den zweiten Verbinder 26 aufgesteckt, sodass sie die Ansteuerungssignale zum Darstellen von Informationen umsetzt.

Der Träger 20 ist in diesem Ausführungsbeispiel so ausgeführt, dass er in der Größe der Anzeigeplatine 10 entspricht. Folglich kann der Adapter 14 an der vorgesehenen Stelle der Anzeigeeinheit 6 angeordnet werden. Die aufgesteckte Anzeigeeinheit 6 führt lediglich zu einer geringfügigen Erhöhung des Bauraums an dieser Stelle. Es ist denkbar, den Adapter 14 so auszuführen, dass die Anzeigeeinheit 6 über geeignete Abstandshalter an dem Adapter 14 verschraubt werden kann.

Die Datenschnittstelle 16 ist hier als eine optische Datenschnittstelle ausgebildet, die keine direkte elektrische Verbindung zwischen dem Adapter 14 und einer Kommunikationseinheit erfordert. Optische Leiter 28 werden der Kommunikationseinheit 36 zugeführt und stellen den Datensatz bzw. Datenstrom bereit. Die Kommunikationseinheit 36 ist dann folglich galvanisch von dem Adapter 14 getrennt.

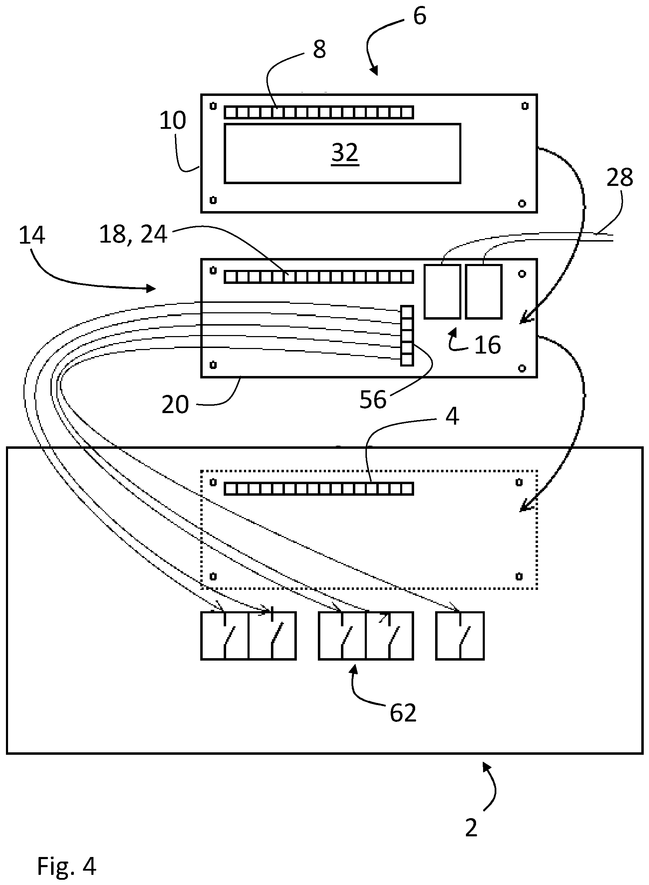

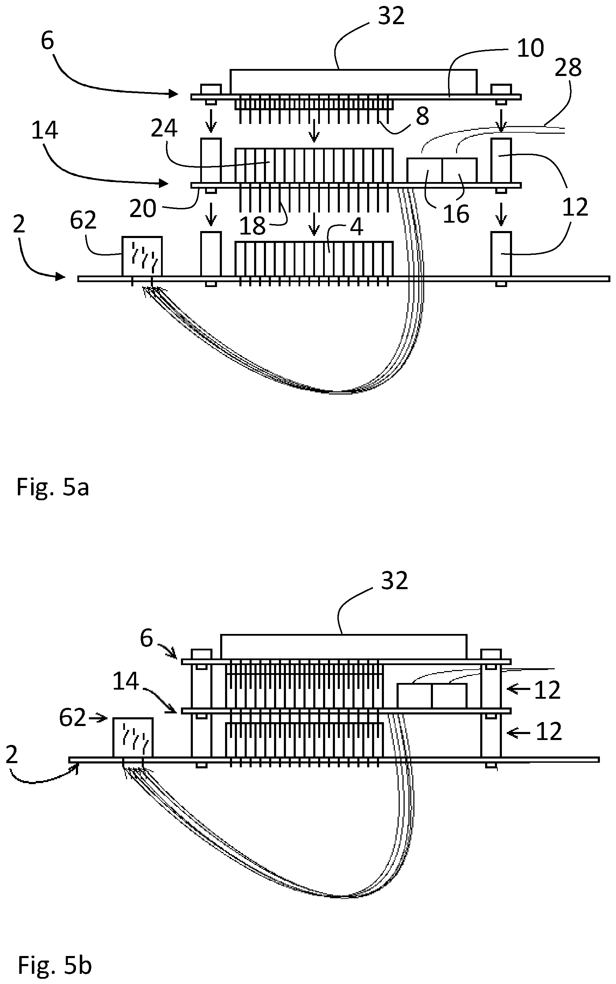

Fig. 4 ist die funktionale Verschaltung zwischen der Schaltplatine 2, dem Adapter 14 und der Anzeigeeinheit 6 schematisch gezeigt. Normalerweise ist die Anzeigeeinheit 6 direkt auf dem Anzeigenanschluss 4 der Schaltplatine 2 aufgesteckt. Erfindungsgemäß wird die Anzeigeeinheit 6 allerdings vom Anzeigenanschluss 4 der Schaltplatine 2 abgekoppelt, um den Adapter 14 dazwischen zu schalten. Der Adapter 14 wird mit den Pins seines ersten unterseitigen Verbinders 18 auf den Anzeigenanschluss 4 der Schaltplatine 2 aufgesteckt und die Anzeigeeinheit 6 auf den oberseitigen zweiten Verbinder 24 des Adapters 14 gesteckt. In Fig. 5a,b wird die räumliche Anordnung als Stapel von parallelen Platinen deutlicher.

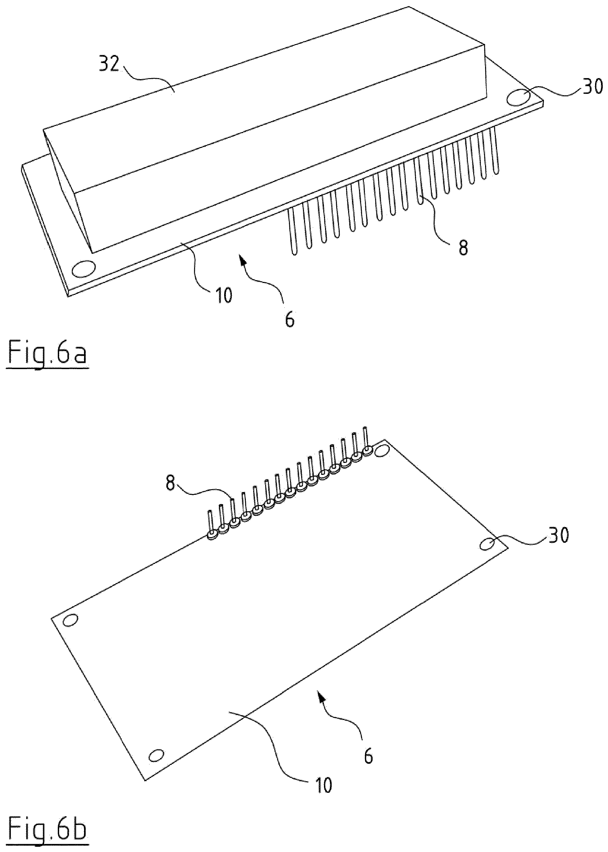

In Fig. 6a und 6b wird die Anzeigeeinheit 6 in einer separaten Darstellung gezeigt. Die Anzeigeplatine 10 weist zum Verbinden mit den Abstandshaltern 12 vier Befestigungsbohrungen 30 auf. Die Pins 8 sind in einer einzelnen Reihe angeordnet und an einer Randbereich der Anzeigeplatine 10 angeordnet. Beispielhaft befindet sich auf einer Oberseite der Anzeigeeinheit 6 eine Flüssigkristallanzeige 32, die etwa als Matrix-Display ausgeführt ist.

Fig. 6b zeigt eine Unterseite der Anzeigeeinheit 6. Hier sind verschiedene elektronische Komponenten angeordnet, die zum Umsetzen von Ansteuerungssignalen und zum Wandeln und/oder Stabilisieren einer Versorgungsspannung dienen.

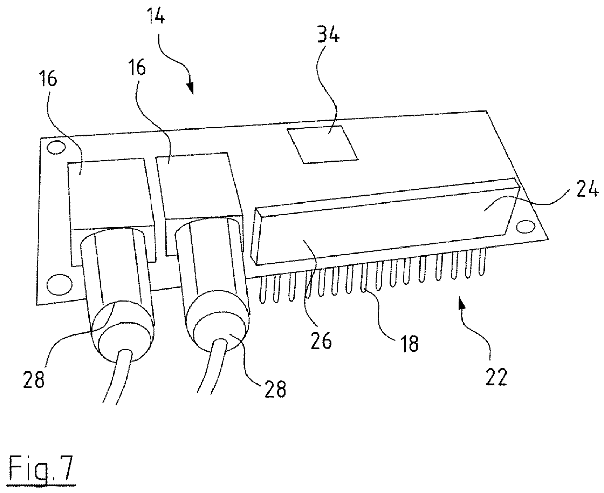

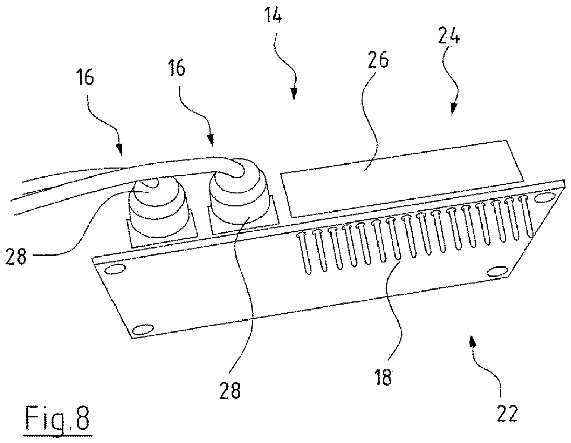

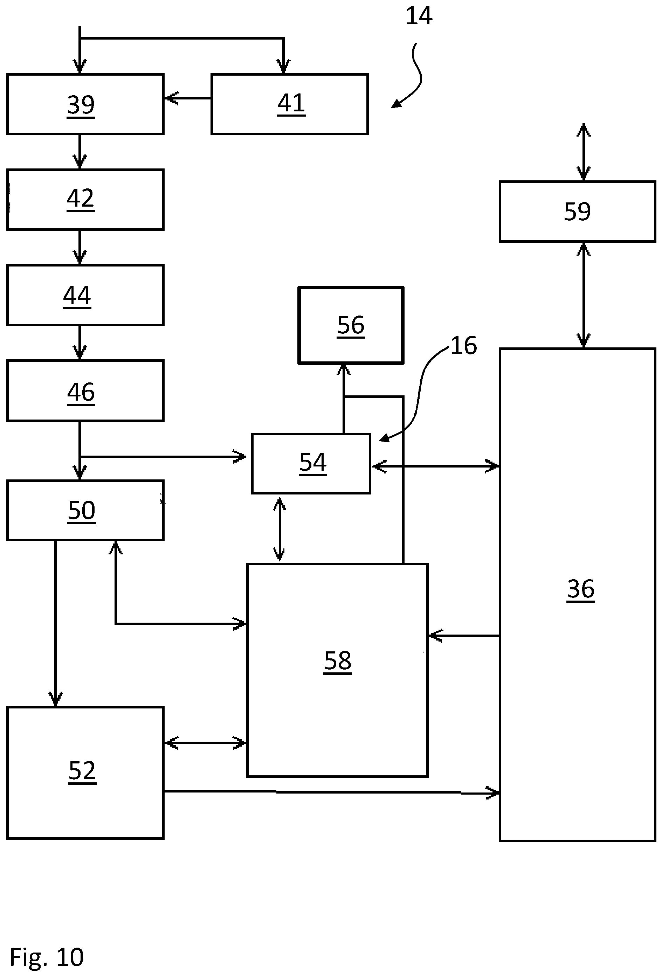

Fig. 7 zeigt eine räumliche Ansicht des Adapters 14 von schräg oben, während Fig. 8 den Adapter 14 von schräg unten zeigt. Hier sind die optischen Leiter 28 mit der Datenschnittstelle 16 verbunden und führen zu der in Fig. 10 gezeigten Kommunikationseinheit 36. Auf dem Träger 20 ist eine Prozessoreinheit 34 angeordnet. Diese ist mit dem ersten Verbinder 18 und der Datenschnittstelle 16 gekoppelt und dazu ausgebildet, Ansteuerungssignale aus der Schaltplatine 2 des Steuergeräts direkt oder in Form von verarbeiteten Signalen oder Daten zu empfangen und als Datensatz oder Datenstrom an der Datenschnittstelle 16 bereitzustellen. Zum Betreiben des Adapters 14 kann eine Spannung verwendet werden, die an dem ersten Verbinder 18 anliegt und zum Versorgen der Anzeigeeinheit 6 mit einer Spannung dient. Aus Fig. 7 wird ferner deutlich, dass der erste Verbinder 18 und der zweite Verbinder 26 deckungsgleich an dem Träger 20 angeordnet sind.

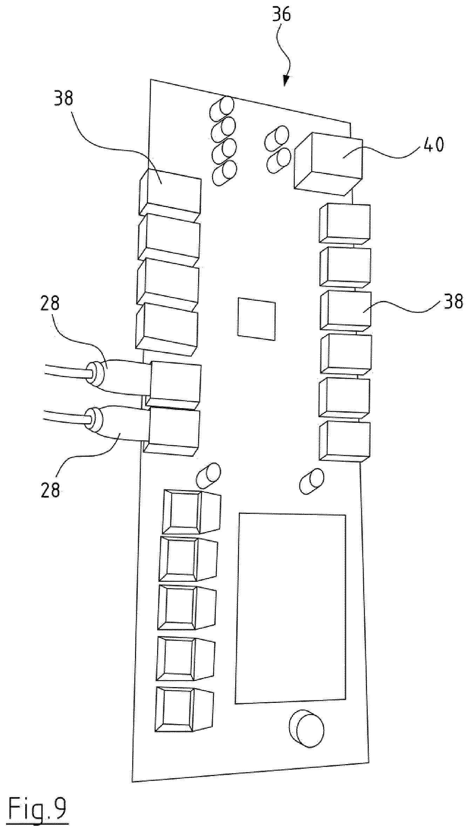

Fig. 9 zeigt eine Kommunikationseinheit 36, die mehrere Anschlüsse 38 für optische Leiter 28 aufweist. Zusätzlich ist ein Netzwerkanschluss 40 vorgesehen, in den ein Datenverbindungskabel, etwa ein Netzwerkkabel mit einem RJ45-Stecker, einsteckbar und mit einem Modem, einem Router, einer Firewall oder dergleichen verbindbar ist. Die Kommunikationseinheit 36 stellt folglich eine Art Netzwerkkarte dar. In dem gezeigten Ausführungsbeispiel liegt eine Besonderheit darin, dass die Kommunikationseinheit 36 eine Vielzahl von Anschlüssen 38 aufweist, welche eine Verbindung mit einer Vielzahl von Adaptern 14 ermöglicht. Es sind etwa komplexere Industrieanlagen denkbar, die mehrere Steuergeräte aufweisen, welche jeweils mit einem eigenen Adapter 14 versehen sind. Diese können mit der Kommunikationseinheit 36 gekoppelt werden, um über ein entsprechendes Datennetzwerk mit einem Benutzer verbunden zu werden. Die Kommunikationseinheit 36 ist bevorzugt galvanisch von den Adaptern 14 getrennt, was in diesem Beispiel durch Verwendung optischer Leiter 28 erfolgt. Es ist besonders günstig, die Kommunikationseinheit 36 mit einer eigenen Stromversorgung zu versorgen.

Fig. 10 zeigt ein Ausführungsbeispiel des Adapters 14 in einer schematischen, block- und funktionsbasierten Darstellung. Der Adapter 14 überwacht einen Display-Bus. Ein Trigger 41 erkennt dabei, ob und wann Ansteuerungssignale an die Anzeigeeinheit 6 gesendet werden, und es wird ein Instruktionsbuffer 39 mit Instruktionen in Form von Ansteuerungssignalen gefüllt. Die Instruktionen werden im Instruktionsbuffer 39 zwischengespeichert und sukzessive einer Vorsteuerung 42 zugeführt, die diese nach und nach abarbeiten kann. Die Vorsteuerung 42 ist dazu ausgebildet, die Instruktionen in Form von Ansteuerungssignalen zu dekodieren und damit das Verhalten der Anzeigeeinheit 6 zu emulieren. Die Vorsteuerung 42 stellt folglich eine Art virtuelle Anzeigeeinheit bereit, die durch entsprechende Regeln oder Algorithmen an die spezifische Anzeigeeinheit 6 angepasst ist. Ist die Anzeigeeinheit 6 beispielsweise ein Matrix-Display und wird auf diesem ein Name eines Untermenüs oder eines Parameters angezeigt, kann die Vorsteuerung 42 folglich eine Art Abbild mit Bildinformationen der einzelnen Pixel des Matrix-Displays erstellen.

Die Ausgabe der Vorsteuerung 42 kann in einem Zwischenspeicher 44 abgelegt werden. Aus dem Zwischenspeicher 44 kann in diesem Beispiel die Prozessoreinheit 34 die Daten abrufen und in Textinformationen umwandeln. Hierzu dient eine Texterkennungseinheit 46, welche ähnlich wie bei einer OCR-Analyse einen in den Bildinformationen enthaltenen Text erkennt. Hierdurch wird statt einer pixelbasierten Abbildung der Anzeigeeinheit 6 lediglich eine Textinformation generiert, durch die eine Datenübertragung zu einem Benutzer, der das Steuergerät fernwartet, eine deutlich geringere Bandbreite benötigt.

Ein entsprechender Datensatz oder Datenstrom mit Textinformationen kann an die Datenschnittstelle 16 gesendet werden, von wo der Datensatz oder Datenstrom einer externen Kommunikationseinheit 36 zugeführt werden kann.

Es ist in diesem Beispiel zusätzlich möglich, aus den TextInformationen logische Verknüpfungen herzuleiten. Hierfür dient eine Inhaltserkennungseinheit 50, die beispielsweise durch Suchmuster bestimmte Ausdrücke und Parameternamen erkennt, wobei zu erwartende Ausdrücke und/oder Parameternamen in einer Datenbank abgelegt sein könnten und mit Textinformationen verglichen werden können. Der Inhaltserkennungseinheit 50 wird damit ermöglicht, automatisch verschiedene Parameter aus dem Steuergerät abzulesen und in einer Parameterspeichereinheit 52 abzulegen.

Damit ein Benutzer und/oder die Inhaltserkennungseinheit nicht nur einen statischen Inhalt der Anzeigeeinheit 6 erfasst, sondern auch einzelne Parameter anwählen oder ändern kann, ist eine Fernwartungslogikeinheit 54 vorgesehen, die Kenntnis der Struktur der Benutzerführung des Steuergeräts aufweist und in der Lage ist, einen von einem Benutzer gewünschten Parameter aufzufinden und gegebenenfalls zu ändern. Zur Umsetzung ist die Fernwartungslogikeinheit 54 mit einer Instruktionseinheit 56 gekoppelt. Diese kann bestimmte, von der Fernwartungslogikeinheit gewünschte Instruktionen umsetzen. Die Instruktionseinheit 56 kann durch einzelne Leitungen mit der Schaltplatine 2 des Steuergeräts verbunden werden. Die Schaltplatine 2 könnte beispielsweise Anschlüsse für einzelne Taster und/oder Schalter umfassen oder es sind Taster und/oder Schalter direkt auf der Schaltplatine 2 aufgelötet. Die Instruktionseinheit 56 kann mit den entsprechenden Anschlüssen oder Lötstellen verbunden werden. Die Instruktionseinheit 56 simuliert etwa einzelne Tastendrücke und gibt diese direkt an die Schaltplatine 2 weiter, sodass Befehle an die Schaltplatine 2 übermittelt werden können.

Zusätzlich kann eine Parameteränderungseinheit 58 vorgesehen sein, die zum automatisierten Auslesen und/oder Ändern von Parametern verwendbar ist. Es ist damit keine Echtzeit-Steuerung des Menüs des Steuergeräts notwendig, bei der sich ein Benutzer selbst durch einzelne Menüpunkte bzw. Parameter arbeitet. Vielmehr kann ein Benutzer gewünschte Parameter an einem Steuercomputer eingeben und an die Parameteränderungseinheit 58 übertragen, die selbsttätig die relevanten Menüpunkte ansteuert und die Parameter wie gewünscht ändert. Die Parameteränderungseinheit 58 ist hierfür mit der Fernwartungslogikeinheit 54, der Inhaltserkennungseinheit 50, der Parameterspeichereinheit, der Kommunikationseinheit 36 sowie zusätzlich - neben der indirekten Kopplung über die Fernwartungslogikeinheit 54 - direkt mit der Instruktionseinheit 56 gekoppelt. Die Kommunikationseinheit 36 ist über eine Bus-Schnittstelle 59 oder Direktverbindung mit einem Kommunikationsnetzwerk signalverbunden.

Für die Instruktionseinheit 56 und die Parameteränderungseinheit 58 wird vorausgesetzt, dass der Aufbau der Eingabeeinheit, d.h. der Taster und/oder Schalter sowie die Auswirkungen auf das Steuergerät vollständig bekannt sind und in Form einer entsprechenden Logik hinterlegt sind. Es könnten beispielsweise Tasten vorgesehen sein, die einen Parameter inkrementell vergrößern oder verkleinern, wohingegen andere Taster zum Durchlaufen einer Menüliste nach oben oder nach unten vorgesehen sind.

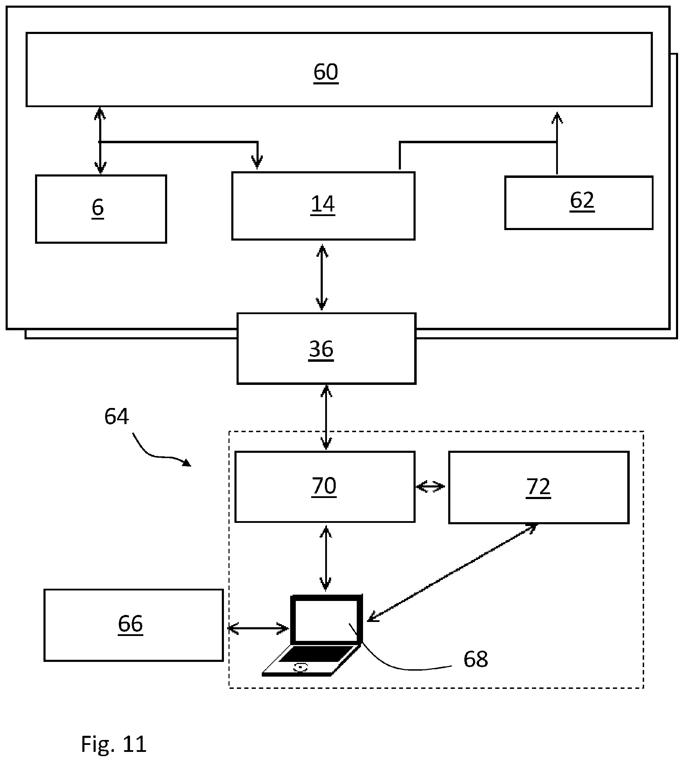

Fig. 11 zeigt eine schematische Gesamtansicht eines Systems aus mehreren Steuergeräten 60, jeweils einem Adapter 14, einer Eingabeeinheit 62 und der Anzeigeeinheit 6, der gemeinsamen Kommunikationseinheit 36 sowie eines möglichen Fernwartungssystems 64 zur Bedienung durch einen Benutzer 66. Dies kann einen Steuercomputer 68 zum Durchführen von Eingaben umfassen, der diese Daten beispielsweise an eine Fernwartungskontrolleinheit 70 sendet. Diese könnte eine Benutzeroberfläche bereitstellen, die zur Fernwartung geeignet ist, sodass der gezeigte Steuercomputer dies lediglich über eine Datenverbindung aufrufen kann und für die Steuerung nicht vollständig vorbereitet werden muss. Die Fernwartungskontrolleinheit 70 kann mit einem Server 72 in Verbindung stehen.

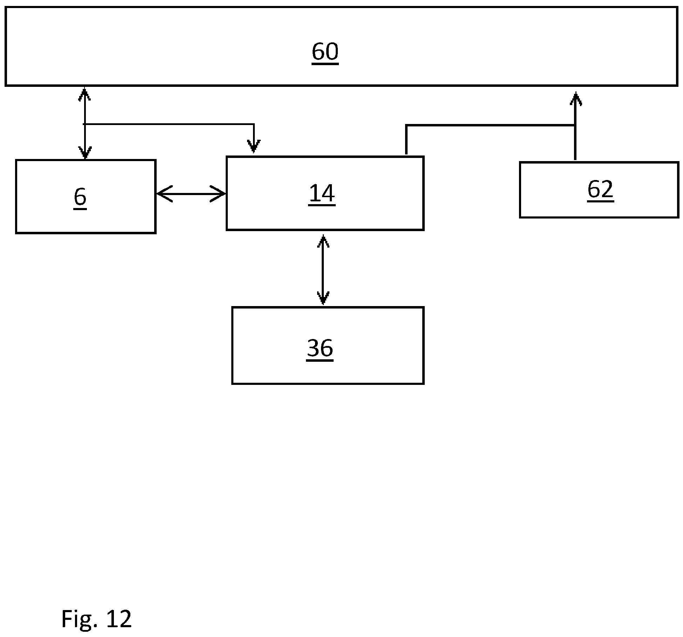

Der Vollständigkeit halber wird in Fig. 12 ein einzelnes System aus einem Steuergerät 60, einem Adapter 14, einer Anzeigeeinheit 6, einer Eingabeeinheit 62 und einer Kommunikationseinheit 36 dargestellt.

### Bezugszeichenliste

- 2: Schaltplatine des Steuergeräts
- 4: Anzeigenanschluss
- 6: Anzeigeeinheit
- 8: Pin
- 10: Anzeigeplatine
- 12: Abstandshalter
- 14: Adapter
- 16: Datenschnittstelle
- 18: erster Verbinder
- 20: Träger
- 22: Unterseite
- 24: Oberseite
- 26: zweiter Verbinder
- 28: optischer Leiter
- 30: Befestigungsbohrung
- 32: Flüssigkristallanzeige
- 34: Prozessoreinheit
- 36: Kommunikationseinheit
- 38: Anschluss für optische Leiter
- 39: Instruktionsbuffer
- 40: Netzwerkanschluss
- 41: Trigger
- 42: Vorsteuerung
- 44: Zwischenspeicher
- 46: Texterkennungseinheit
- 48: Datensatz oder Datenstrom
- 50: Inhaltserkennungseinheit
- 52: Parameterspeichereinheit
- 54: Fernwartungslogikeinheit
- 56: Instruktionseinheit
- 58: Parameteränderungseinheit
- 59: Bus-Schnittstelle
- 60: Steuergerät
- 62: Eingabeeinheit
- 64: Fernwartungssystem
- 66: Benutzer
- 68: Steuercomputer
- 70: Fernwartungskontrolleinheit
- 72: Server

## Patentansprüche

1. Adapter (14) zum Koppeln eines eine Anzeigeeinheit (6) aufweisenden Steuergeräts (60) mit einem Kommunikationsnetzwerk, wobei der Adapter (14) einen Träger (20) aufweist, der Adapter (14) mit:
- einem ersten Verbinder (18) zum Verbinden des Adapters (14) mit einem Anzeigenanschluss (4) des Steuergeräts (60),
- einem mit dem ersten Verbinder (18) elektrisch verbundenen zweiten Verbinder (26) zum Durchleiten empfangener Signale von dem ersten Verbinder (18) zu dem zweiten Verbinder (26),
- einer Prozessoreinheit (34), und
- einer Datenschnittstelle (16),
wobei der erste Verbinder (18) und der zweite Verbinder (26) mechanisch komplementär zueinander ausgeführt sind,
wobei die Prozessoreinheit (34) mit dem ersten Verbinder (18) und der Datenschnittstelle (16) gekoppelt ist und dazu ausgebildet ist, von dem ersten Verbinder (18) empfangene Ansteuerungssignale, die zum Ansteuern der Anzeigeeinheit (6) vorgesehen sind, in einen Datensatz oder einen Datenstrom umzusetzen und an die Datenschnittstelle (16) zu leiten, und
wobei die Datenschnittstelle (16) dazu ausgebildet ist, den Datensatz oder Datenstrom zu einer mit dem Kommunikationsnetzwerk signalverbundenen externen Kommunikationseinheit (36) zu übertragen.

2. Adapter (14) nach Anspruch 1, wobei der Träger (20) eine Platine aufweist, und wobei der erste Verbinder (18) und der zweite Verbinder (26) deckungsgleich auf einer Unterseite (22) und einer Oberseite (24) des Trägers (20) angeordnet sind.

3. Adapter (14) nach Anspruch 1 oder 2, wobei die Datenschnittstelle (16) eine optische Datenschnittstelle ist.

4. Adapter (14) nach einem der vorhergehenden Ansprüche, ferner aufweisend eine Vorsteuerung (42), die dazu ausgebildet ist, die Ansteuerungssignale aufzunehmen und zu einer für die Anzeigeeinheit (6) vorgesehenen Abbildung zu dekodieren.

5. Adapter (14) nach Anspruch 4, wobei der Prozessor (34) eine Texterkennungseinheit (46) aufweist, die dazu ausgebildet ist, die Ausgabe der Vorsteuerung (42) in Textinformationen umzuwandeln.

6. Adapter (14) nach Anspruch 5, wobei der Prozessor (34) eine Inhaltserkennungseinheit (50) aufweist, die dazu ausgebildet ist, spezifische Ausdrücke in den Textinformationen zu erkennen.

7. Adapter (14) nach einem der vorhergehenden Ansprüche, ferner aufweisend eine Instruktionseinheit (56), die mit dem Prozessor (34) gekoppelt ist und mit Anschlüssen einer Eingabeeinheit (62) des Steuergeräts (60) verbindbar ist, wobei die Instruktionseinheit (56) dazu ausgebildet ist, elektrische Signale zum Simulieren von manuellen Eingaben in die Eingabeeinheit (62) zu generieren.

8. Adapter (14) nach Anspruch 7, wobei der Prozessor (34) eine Parameteränderungseinheit (58) aufweist, die mit der Instruktionseinheit (56) gekoppelt ist und dazu ausgebildet ist, automatisch mittels der Instruktionseinheit (56) gezielt nacheinander änderbare Parameter aus dem Steuergerät (60) abzurufen und/oder von einem Benutzer vorgegebene Parameter mittels der Instruktionseinheit (56) in dem Steuergerät (60) durch gezielte Eingaben zu ändern.

9. Fernwartungssystem (64), aufweisend mindestens einen Adapter (14) nach einem der vorhergehenden Ansprüche und eine Kommunikationseinheit (36), wobei der mindestens eine Adapter (14) mit der Kommunikationseinheit (36) verbindbar ist.

10. Fernwartungssystem (64) nach Anspruch 9, wobei die Kommunikationseinheit (36) ein Datennetzwerkgerät ist.

11. Fernwartungssystem (64) nach Anspruch 9 oder 10, mit mehreren Adaptern (14), wobei die Kommunikationseinheit (36) mehrere Adapteranschlüsse (38) zum jeweiligen Anschließen der Adapter (14) aufweist.

12. Fernwartungssystem (64) nach einem der Ansprüche 9 bis 11, wobei der mindestens eine Adapter (14) und die Kommunikationseinheit (36) dazu ausgebildet sind, eine galvanisch getrennte Verbindung zueinander auszubilden.

13. Verfahren zum Koppeln eines eine Anzeigeeinheit (6) aufweisenden Steuergeräts (60) mit einem Kommunikationsnetzwerk, mit den Schritten:
- Abkoppeln der Anzeigeeinheit (6) von einem Anzeigenanschluss (4) des Steuergeräts (60),
- Verbinden eines ersten Verbinders (18) eines Adapters (14) mit dem Anzeigenanschluss (4) des Steuergeräts (60),
- Umsetzen von über den ersten Verbinder (18) empfangenen Ansteuerungssignalen, die ursprünglich zum Ansteuern der abgekoppelten Anzeigeeinheit (6) vorgesehen sind, im Adapter (14) in einen Datensatz oder einen Datenstrom,
- Übertragen des Datensatzes oder des Datenstroms an eine mit dem Kommunikationsnetzwerk signalverbundene externe Kommunikationseinheit (36).

14. Verfahren nach Anspruch 13, ferner mit den Schritten:
- Verbinden der abgekoppelten Anzeigeeinheit (6) mit einem zum ersten Verbinder (18) mechanisch komplementär ausgeführten zweiten Verbinder (26) des Adapters (14), und
- Anzeigen von Daten mittels der Anzeigeeinheit (6) entsprechend der empfangenen Ansteuerungssignale.

15. Verfahren nach Anspruch 13 oder 14, ferner mit den Schritten:
- Verbinden einer Instruktionseinheit (56) des Adapters (14) mit Anschlüssen einer Eingabeeinheit (62) des Steuergeräts (60), und
- Simulieren von manuellen Eingaben in die Eingabeeinheit (62) des Steuergeräts (60) mittels der Instruktionseinheit (56) des Adapters (14).

## Claims

1. An adapter (14) for coupling a control device (60) having a display unit (6) to a communication network, wherein the adapter (14) has a carrier (20) and the adapter (14) comprises:
a first connector (18) for connecting the adapter (14) to a display port (4) of the control device (60),
- a second connector (26) that is electrically connected to the first connector (18) and serves for conducting signals received from the first connector (18) to the second connector (26),
- a processor unit (34) and
- a data interface (16),
wherein the first connector (18) and the second connector (26) are mechanically designed complementary to one another,
wherein the processor unit (34) is coupled to the first connector (18) and the data interface (16) and designed for converting control signals, which are received from the first connector (18) and intended for controlling the display unit (6), into a data set or a data stream, as well as for conducting said data set or data stream to the data interface (16), and
wherein the data interface (16) is designed for transmitting the data set or data stream to an external communication unit (36) that is signal-connected to the communication network.

2. The adapter (14) according to claim 1, wherein the carrier (20) has a printed circuit board, and wherein the first connector (18) and the second connector (26) are arranged congruently on an underside (22) and an upper side (24) of the carrier (20).

3. The adapter (14) according to claim 1 or 2, wherein the data interface (16) is an optical data interface.

4. The adapter (14) according to one of the preceding claims, furthermore having a feedforward control (42) that is designed for recording the control signals and for decoding said control signals into an illustration intended for the display unit (6).

5. The adapter (14) according to claim 4, wherein the processor (34) has a text recognition unit (46) that is designed for converting the output of the feedforward control (42) into text information.

6. The adapter (14) according to claim 5, wherein the processor (34) has a content recognition unit (50) that is designed for recognizing specific expressions in the text information.

7. The adapter (14) according to one of the preceding claims, furthermore having an instruction unit (56) that is coupled to the processor (34) and can be connected to ports of an input unit (62) of the control device (60), wherein the instruction unit (56) is designed for generating electrical signals for simulating manual entries into the input unit (62).

8. The adapter (14) according to claim 7, wherein the processor (34) has a parameter changing unit (58) that is coupled to the instruction unit (56) and designed for automatically polling parameters, which can be purposefully changed in succession by means of the instruction unit (56), from the control device (60) and/or for changing parameters specified by a user by means of the instruction unit (56) in the control device (60) as a result of purposeful entries.

9. A remote maintenance system (64) having at least one adapter (14) according to one of the preceding claims and a communication unit (36), wherein the at least one adapter (14) can be connected to the communication unit (36).

10. The remote maintenance system (64) according to claim 9, wherein the communication unit (36) is a data network device.

11. The remote maintenance system (64) according to claim 9 or 10, wherein the remote maintenance system has multiple adapters (14), and wherein the communication unit (36) has multiple adapter ports (38) for respectively connecting the adapters (14).

12. The remote maintenance system (64) according to one of claims 9 to 11, wherein the at least one adapter (14) and the communication unit (36) are designed for producing a galvanically isolated connection to one another.

13. A method for coupling a control device (60) having a display unit (6) to a communication network, with said method comprising the steps of:
- decoupling the display unit (6) from the display port (4) of the control device (60),
- connecting a first connector (18) of an adapter (14) to the display port (4) of the control device (60),
- converting control signals, which are received via the first connector (18) and originally intended for controlling the decoupled display unit (6), into a data set or a data stream in the adapter (14), and
- transmitting the data set or the data stream to an external communication unit (36) that is signal-connected to the communication network.

14. The method according to claim 13, furthermore comprising the steps of:
- connecting the decoupled display unit (6) to a second connector (26) of the adapter (14), which second connector is mechanically designed complementary to the first connector (18), and
- displaying data by means of the display unit (6) in accordance with the received control signals.

15. The method according to claim 13 or 14, furthermore comprising the steps of:
- connecting an instruction unit (56) of the adapter (14) to ports of an input unit (62) of the control device (60), and
- simulating manual entries into the input unit (62) of the control device (60) by means of the instruction unit (56) of the adapter (14).

## Revendications

1. Adaptateur (14), destiné à coupler un dispositif de commande (60) comportant une unité d'affichage (6) avec un réseau de communication, l'adaptateur (14) comportant un support (20), l'adaptateur (14) comprenant :
- un premier connecteur (18), destiné à connecter l'adaptateur (14) avec un raccordement d'affichage (4) du dispositif de commande (60),
- un deuxième connecteur (26) électriquement connecté avec le premier connecteur (18), destiné à faire passer des signaux réceptionnés du premier connecteur (18) vers le deuxième connecteur (26),
- une unité de processeur (34) et
- une interface de données (16),
le premier connecteur (18) et le deuxième connecteur (26) étant réalisés de manière mécaniquement complémentaire l'un avec l'autre,
l'unité de processeur (34) étant couplée avec le premier connecteur (18) et l'interface de données (16) et configurée pour convertir des signaux d'activation réceptionnés par le premier connecteur (18), qui sont prévus pour activer l'unité d'affichage (6) en un jeu de données ou un flux de données et pour les conduire vers l'interface de données (16) et
l'interface de données (16) étant configurée pour transmettre le jeu de données ou le flux de données vers une unité de communication (36) externe connectée par signaux avec le réseau de communication.

2. Adaptateur (14) selon la revendication 1, le support (20) comportant une carte de circuit imprimé et le premier connecteur (18) et le deuxième connecteur (26) étant placés de manière coïncidente sur une face inférieure (22) et une face supérieure (24) du support (20).

3. Adaptateur (14) selon la revendication 1 ou 2, l'interface de données (16) étant une interface de données optique.

4. Adaptateur (14) selon l'une quelconque des revendications précédentes, comportant par ailleurs une commande pilote (42), qui est conçue pour enregistrer les signaux d'activation et pour les décoder pour une représentation prévue pour l'unité d'affichage (6).

5. Adaptateur (14) selon la revendication 4, le processeur (34) comportant une unité de reconnaissance de texte (46), qui est conçue pour convertir l'édition de la commande pilote (42) en informations textuelles.

6. Adaptateur (14) selon la revendication 5, le processeur (34) comprenant une unité de reconnaissance de contenu (50), qui est conçue pour reconnaître des expressions spécifiques dans les informations textuelles.

7. Adaptateur (14) selon l'une quelconque des revendications précédentes, comportant par ailleurs une unité d'instructions (56), qui est couplée avec le processeur (34) et qui peut se connecter avec des raccordements d'une unité de saisie (62) du dispositif de commande (60), l'unité d'instructions (56) étant conçue pour générer des signaux électriques pour la simulation de saisies manuelles dans l'unité de saisie (62).

8. Adaptateur (14) selon la revendication 7, le processeur (34) comportant une unité de modification de paramètres (58), qui est couplée avec l'unité d'instructions (56) et qui est conçue pour appeler automatiquement au moyen de l'unité d'instructions (56) des paramètres successivement modifiables de manière ciblée à partir du dispositif de commande (60) et / ou pour modifier par des saisies ciblées dans le dispositif de commande (60) au moyen de l'unité d'instructions (56) des paramètres prédéfinis par un utilisateur.

9. Système de télémaintenance (64), comportant au moins un adaptateur (14) selon l'une quelconque des revendications précédentes et une unité de communication (36), l'au moins un adaptateur (14) pouvant se connecter avec l'unité de communication (36).

10. Système de télémaintenance (64) selon la revendication 9, l'unité de communication (36) étant un dispositif de réseau de données.

11. Système de télémaintenance (64) selon la revendication 9 ou 10, pourvu de plusieurs adaptateurs (14), l'unité de communication (36) comportant plusieurs raccordements d'adaptateurs (38), pour le raccordement respectif des adaptateurs (14).

12. Système de télémaintenance (64) selon l'une quelconque des revendications 9 à 11, l'au moins un adaptateur (14) et l'unité de communication (36) étant conçus pour constituer une connexion mutuelle galvaniquement séparée.

13. Procédé, destiné à coupler un dispositif de commande (60) comportant une unité d'affichage (6) avec un réseau de communication, comprenant les étapes consistant à:
- découpler l'unité d'affichage (6) d'un raccordement d'affichage (4) du dispositif de commande (60),
- connecter une premier connecteur (18) d'un adaptateur (14) avec le raccordement d'affichage (4) du dispositif de commande (60),
- dans l'adaptateur (14), convertir des signaux d'activation réceptionnés par l'intermédiaire du premier connecteur (18), qui sont initialement prévus pour activer l'unité d'affichage (6) découplée en un jeu de données ou en un flux de données,
transmettre le jeu de données ou le flux de données à une unité de communication (36) externe, connectée par signaux avec le réseau de communication.

14. Procédé selon la revendication 13, comprenant par ailleurs, les étapes consistant à :
- connecter l'unité d'affichage (6) découplée avec un deuxième connecteur (26) de l'adaptateur (14) réalisé de manière mécaniquement complémentaire avec le premier connecteur (18) et
- afficher des données au moyen de l'unité d'affichage (6), en fonction des signaux d'activation réceptionnés.

15. Procédé selon la revendication 13 ou 14, comprenant par ailleurs les étapes consistant à :
- connecter une unité d'instructions (56) de l'adaptateur (14) avec des raccordements d'une unité de saisie (62) du dispositif de commande (60),
- simuler des saisies manuelles dans l'unité de saisie (62) du dispositif de commande (60) au moyen de l'unité d'instructions (56) de l'adaptateur (14).
